# EUROPÄISCHE PATENTSCHRIFT

(11) **EP 1 301 999 B1**
(45) Veröffentlichungstag und Bekanntmachung des Hinweises auf die Patenterteilung: **27.09.2006**
(21) Anmeldenummer: 01953856.0
(22) Anmeldetag: 04.07.2001
(51) Int. Cl.: H04B 1/38, H04M 1/60, G01C 21/20

(54) **FREISPRECHEINRICHTUNG UND VERFAHREN ZUM BETRIEB EINER FREISPRECHEINRICHTUNG**
HANDS-FREE DEVICE AND A METHOD FOR OPERATING A HANDS-FREE DEVICE
DISPOSITIF MAINS LIBRES ET SON PROCEDE D'EXPLOITATION

(30) Priorität: 14.07.2000 DE 10034286
(43) Veröffentlichungstag der Anmeldung: 16.04.2003
(73) Patentinhaber: SIEMENS AKTIENGESELLSCHAFT, 80333 München (DE)
(72) Erfinder: BREHLER, Markus, 82065 Baierbrunn (DE); TÖLG, Thomas, 85567 Grafing (DE)
(86) Internationale Anmeldenummer: PCT/DE2001/002477
(87) Internationale Veröffentlichungsnummer: WO 2002/007410

(56) Entgegenhaltungen:
- EP-A- 0 854 584
- EP-A- 0 987 910
- WO-A-96/18275
- WO-A-98/06229
- WO-A-99/30429
- WO-A-99/31812
- US-A- 5 479 479
- US-A- 6 029 072

## Beschreibung

Die Erfindung betrifft eine Freisprecheinrichtung mit Zusatzfunktion für ein Mobilfunkgerät, das sich in einer Telefonhalterung befindet. Weiterhin betrifft die Erfindung ein Verfahren zum Betrieb einer Freisprecheinrichtung mit Zusatzfunktion für ein Mobilfunkgerät, das sich in einer Telefonhalterung befindet.

In Zeiten zunehmender Mobilkommunikation sind Freisprecheinrichtungen in Kraftfahrzeugen zur Erhöhung der Sicherheit der Verkehrsteilnehmer unerläßlich, da sie die Bedienung und die Handhabung eines Mobilfunkgerätes vereinfachen.

Weiterhin sind Positionsbestimmungssysteme in Kraftfahrzeugen bekannt, die eine Ermittlung einer aktuellen Position ermöglichen. Eine häufig angewandte Methode, erfolgt mit Hilfe der satellitengestützten GPS-Technik (GPS = Global Positioning System). Hierbei werden im allgemeinen eine Mehrzahl von Satelliten angepeilt, über die mit Hilfe verschiedener Signallaufzeiten eine Triangulation vorgenommen und daraus die momentane Positionsbestimmung durchgeführt wird. Aber auch andere satellitengestützte Systeme, wie beispielsweise Gallileo, oder landgestützte Funknavigationssysteme, wie zum Beispiel Loran-C, das mit landgestützten Langwellensendern arbeitet, oder eine Kombination aus satelliten- und landgestützten Navigationssystem, wie zum Beispiel DGPS (Differential GPS) oder GPS/Loran-C kombinierte Systeme sind zur Positionsbestimmung möglich.

Eine Freisprecheinrichtung nach dem Stand der Technik ist beispielsweise aus EP-A-0 854 584 bekannt.

Darüber hinaus sollten die Daten eines Positionsbestimmungssystems zur Auswertung oder zur Information bestimmter Zielgruppen kontrolliert übermittelt werden, wie beispielsweise mit Hilfe eines Mobiltelefons. Hierzu werden jedoch die entsprechenden telefonspezifischen Halterungen und eine entsprechende Schnittstelle benötigt.

Bisher liegen allerdings Freisprecheinrichtungen mit Mobiltelefon und Positionsbestimmungssysteme als separate Systeme vor und eine Erweiterung im Hinblick auf eine Anbindung zusätzlicher externer Geräte ist nicht möglich.

Es ist daher Aufgabe der Erfindung, eine Freisprecheinrichtung aufzuzeigen, die ein Positionsbestimmungssystem integriert und eine Anbindung externer Geräte ermöglicht. Weiterhin soll ein Verfahren zum Betrieb der Freisprecheinrichtung entwickelt werden.

Die Aufgabe zur Entwicklung eines Verfahrens wird durch die Merkmale des ersten unabhängigen Verfahrensanspruches, die Aufgabe zur Entwicklung einer Freisprecheinrichtung wird durch die Merkmale des ersten unabhängigen Vorrichtungsanspruches gelöst.

Demgemäß schlagen die Erfinder eine Freisprecheinrichtung vor, mit Zusatzfunktion für ein Mobilfunkgerät, das sich in einer Telefonhalterung befindet, wobei die Zusatzfunktion zumindest ein Positionsbestimmungssystem, vorzugsweise ein GPS, zur Ermittlung von Positionsdaten und eine NMEA-Schnittstelle (NMEA = National Marine Electronics Association) aufweist, und mindestens eine Antenne zum Senden/Empfangen von Satelliten- und/oder Funksignalen und eine ATC-Schnittstelle zur Fernsteuerung des Mobilfunkgerätes vorgesehen ist. AT ist ein Befehlssatz zur Fernsteuerung von elektrischen Geräten, C steht für Command Set oder Cellular.

Eine bevorzugte Ausgestaltung sieht vor, daß zumindest eine Schnittstelle zur Anbindung eines externen prozessorgesteuerten Systems (externes Gerät) vorgesehen ist. Vorzugsweise stellt dieses prozessorgesteuerte System, zum Beispiel einen Laptop, einen Computer oder einen PDA (PDA = Personal Digital Assistant) dar, der zumindest eine serielle Schnittstelle enthält zur Verbindung mit der erfindungsgemäßen Freisprecheinrichtung sowie eine Software, zum Erkennen, Senden und Empfangen von NMEA-Daten und zum Senden von AT-Befehlen.

Die ATC-Schnittstelle ist auf einem Stecker, vorzugsweise auf einem 6-poligen Westernstecker, aufgelegt, wobei die ATC-Schnittstelle die üblichen AT-Befehle des Mobilfunkgerätes nutzt. Eine Beschreibung der Kommandos ist beispielsweise zu finden unter:
http://www.siemens.de/ic/products/cd/english/index/products/ mobiles/tips/s25 atc commandset v10.pdf

In einer vorteilhaften Ausführung ist auf dem Stecker auch die NMEA-Schnittstelle aufgelegt (ATC/NMEA-Schnittstelle), wobei ein Pin des Westernsteckers als Sender der NMEA-Schnittstelle, ein zweiter Pin als Empfänger der NMEA-Schnittstelle, ein dritter Pin als Sender der ATC-Schnittstelle und ein vierter Pin als Empfänger der ATC-Schnittstelle fungiert. Die zwei verbleibenden Pins sind für die Spannungsversorgung des externen Gerätes und für die Masse vorgesehen.

Eine Ausgestaltung der erfindungsgemäßen Freisprecheinrichtung sieht ein Programm zur Erzeugung von NMEA-Datensätzen, vorzugsweise im NMEA-0183 Standard vor. Hierdurch werden die ermittelten Positionsdaten in NMEA-Positionsdatensätze umgewandelt und über die NMEA-Schnittstelle dem externen Gerät zur Verfügung gestellt.

Hierbei können insgesamt sieben NMEA-Datensätze zur Verfügung gestellt werden. Jedem dieser Datensätze kann mittels herstellerspezifischer NMEA-Kommandos ein individuelles Ausgabeintervall zugewiesen werden. Ein Ausgabeintervall gleich 0 unterbindet beispielsweise die Ausgabe des jeweiligen Datensatzes. Das Ausgabeintervall wird in einem RAM der Freisprecheinrichtung gespeichert und bleibt somit solange erhalten, wie die 12 Volt Versorgungsspannung an der Freisprecheinrichtung anliegt.

Der NMEA-0183 Standard legt fest, daß die übertragenen Daten ausschließlich aus druckbaren ASCII-Zeichen bestehen. Die Daten werden in der Form von Sätzen übertragen, die jeweils mit einem "$"-Zeichen starten. Darauf folgen zwei Zeichen, die den Typ beispielsweise des Navigationsgerätes wiedergeben. Bei GPS-Empfängern sind diese immer "GP". Vor den eigentlichen Daten kommen noch drei Zeichen, die den Typ des Datensatzes bezeichnen. Die folgenden Daten sind durch Kommas getrennt und werden eventuell durch eine optionale Checksumme abgeschlossen. Zum Schluß folgt noch ein Zeilenvorschub (CR/LF).

Ein Datensatz kann inklusive Checksumme und Zeilenvorschub bis zu 82 Zeichen umfassen. Sind für ein Datenfeld keine Daten vorhanden, so wird es leer gelassen, das heißt, es werden zwei Kommas ohne dazwischen liegendes Leerzeichen gesendet. Die Länge einzelner Datenfelder kann variieren. Deshalb sollte ein Gerät, daß NMEA-Daten empfängt, einzelne Datenfelder durch Abzählen von Kommas lokalisieren.

Die optionale Checksumme besteht vorzugsweise aus dem "*"-Zeichen und zwei hexadezimalen Ziffer, die das Exklusiv-ODER aus allen Zeichen zwischen dem "$" and dem "*" darstellen.

Dieser Standard erlaubt es beispielsweise Herstellern von Navigationsgeräten, herstellerspezifische Datensatzformate zu definieren. Solche Sätze beginnen also vorzugsweise mit "$P", gefolgt von einem drei Zeichen umfassenden Herstellercode und schließlich einem beliebigen Inhalt, gemäß dem üblichen NMEA-Format.

In einer Weiterentwicklung der erfindungsgemäßen Freisprecheinrichtung ist zumindest ein Umschalter vorgesehen ist, der die ATC-Schnittstelle steuert, also beispielsweise aktiviert oder deaktiviert.

Die ATC-Schnittstelle kann zum Beispiel mit Hilfe eines Kommandos, vorzugsweise eines NMEA-Kommandos, angesteuert werden. Das NMEA-Kommando kann innerhalb der Freisprecheinrichtung oder von dem externen Gerät abgesetzt werden, so daß die ATC-Schnittstelle sowohl von einem Prozessor des externen Gerätes als auch von einem Prozessor der Freisprecheinrichtung, beispielsweise zur Steuerung von Telematik- und Flottenmanagement-Funktionen, benutzt werden kann. Verfügt nun ein Prozessor über die ATC-Schnittstelle, wird der jeweils andere, entkoppelte, Prozessor nicht über die Zustandsänderungen des Mobilfunkgerätes in Kenntnis gesetzt. Dies führt bei einer Zurückschaltung der ATC-Schnittstelle dazu, daß der momentane Mobilfunkgerätezustand abweichend von den zuvor eingestellten gespeicherten Mobilfunkgeräteparametern im Prozessor ist. Dieser undefinierte Systemzustand kann bis hin zu einem Systemabsturz führen.

Um solche Probleme und Fehlfunktionen auszuschließen, kann die ATC-Schnittstelle immer nur von einer Applikation aus bedient werden, das heißt entweder von der Freisprecheinrichtung oder von dem externen Gerät. Hierbei können folgende Maßnahmen getroffen werden:
- gezieltes Umschalten der ATC-Schnittstelle durch Eingabe eines speziell hierfür definierten NMEA-Kommandos;
- gezieltes Zurückschalten der ATC-Schnittstelle durch Eingabe eines speziell hierfür definierten NMEA-Kommandos;
- Zurücksetzen des Gesamtsystems nach Zurückschalten der ATC-Schnittstelle, damit der definierte Ursprungszustand wieder hergestellt ist.

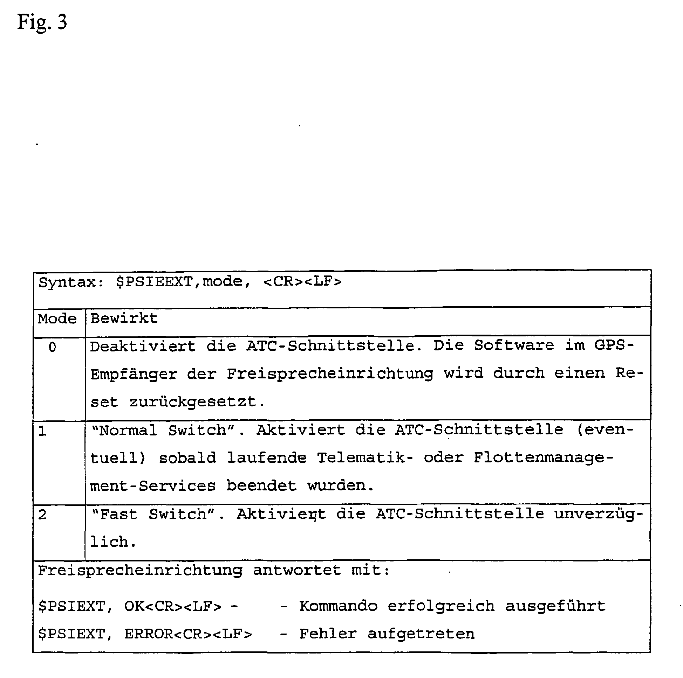

Die NMEA-Kommandos zum Umschalten und Zurücksetzen der ATC-Schnittstelle sind in der Tabelle der Figur 3 aufgezeigt.

Die Eingabe des NMEA-Befehls an der ATC/NMEA-Schnittstelle kann über zwei serielle Schnittstellen in der externen Applikation erfolgen oder mit Hilfe eines Umschalters (elektrisch/mechanisch) zwischen einer einzelnen seriellen Schnittstelle der externen Applikation und der ATC/NMEA-Schnittstelle.

Eine andere Weiterentwicklung sieht eine Dualbandkombiantenne, für den Empfang von Positionsdaten und zum Senden/Empfangen von Mobilfunkdaten vor, die zum Beispiel als Dach-, Scheibenklebeantenne und als Klemmantenne ausgeführt sein kann. Vorzugsweise ist die Kombiantenne neben der Übertragung von beispielsweise GPS-Satellitendaten, für die Übertragung im GSM-Netz (GSM = Global System for Mobile Communication) oder zum Beispiel für GPRS (GPRS = General Packet Radio Service) oder UMTS (UMTS = Universal Mobile Telecommunications System) ausgestaltet.

In einer anderen Ausgestaltung weist die erfindungsgemäße Freisprecheinrichtung ein Mikrofon, einen Lautsprecher, einen Zusatzhörer und einen Datenkabelsatz, zur Übertragung von genormten NMEA-Datensätzen auf.

Darüber hinaus kann vorteilhaft ein in der Freisprecheinrichtung implementiertes Flottenmanagementprotokoll vorgesehen sein. Zusammen mit einem Notebook und spezieller PC-Navigationssoftware läßt sich die erfindungsgemäße Freisprecheinrichtung zu einem Kfz-Navigationssystem ausbauen. Die Freisprecheinrichtung gibt hierzu die vom GPS-Empfänger ermittelten Navigationsdaten im NMEA-0183 Format aus. Die Ausgabe der Daten erfolgt an der NMEA-Schnittstelle.

Durch die erfindungsgemäße Ausgestaltung der Freisprecheinrichtung ergibt sich für Benutzer oder Systementwickler die Möglichkeit, eigene Datensatzformate zu definieren und somit eine eigene, auf die Bedürfnisse angepaßte, Flottenmanagementsoftware zu entwickeln und die vorgegebene Hardware zu nutzen.

Weiterhin schlagen die Erfinder ein Verfahren vor, zum Betrieb einer Freisprecheinrichtung mit Zusatzfunktion für ein Mobilfunkgerät, das sich in einer Telefonhalterung befindet, wobei zumindest Positionsdaten über eine Antenne empfangen und zur Verfügung gestellt werden, und die Positionsdaten über eine ATC-Schnittstelle der Freisprecheinrichtung automatisch über das Mobilfunkgerät, vorzugsweise als SMS an ein definiertes Ziel gesendet werden, wobei die ATC-Schnittstelle mit Hilfe eines Kommandos, vorzugsweise eines NMEA-Kommandos angesteuert wird.

In einer vorteilhaften Ausgestaltung des erfindungsgemäßen Verfahrens werden die Positionsdaten in NMEA-Positionsdatensätze umgeformt, vorzugsweise gemäß NMEA-0183 Standard, und über einer NMEA-Schnittstelle, wie voranstehend beschrieben, zur Verfügung gestellt.

Vorteilhaft werden die NMEA-Positionsdatensätze von einem prozessorgesteuerten System entnommen und bearbeitet und aufbereitete Systemdaten der Freisprecheinrichtung der ATC-Schnittstelle zugeleitet und über das Mobilfunkgerät zu einem definierten Ziel übermittelt, wobei die aufbereiteten Systemdaten zumindest AT-Befehle zur Fernsteuerung des Mobilfunkgerätes und die bearbeiteten NMEA-Positionsdatensätze enthalten. Die berechneten Positionsdaten können also bearbeitet, gewandelt und mit oder ohne Zusatzinformationen der ATC-Schnittstelle der Freisprecheinrichtung zugeleitet werden.

Zusatzinformationen sind zum Beispiel Meß- und Zustandsdaten des die Freisprecheinrichtung tragenden Fahrzeugs, wie beispielsweise der Zustand einer Laderaumtür (offen/geschlossen), die Temperatur in einem Transportfahrzeug (Kühlwagen, Tiertransport), eine Stromsituation, Feuermeldezustände oder der Druck und der Füllstand eines Tanklasters. Mit Hilfe dieser Orts- und Zusatzinformationen können Überwachungssysteme für Spediteure und Lieferanten ermöglicht werden, um beispielsweise die Routen- und Termintreue, beziehungsweise den Transportfortschritt der Auslieferer zu kontrollieren.

Die AT-Befehle dienen zur Fernsteuerung des Mobilfunkgerätes, so daß das Mobilfunkgerät vorzugsweise die NMEA-Positionsdatensätze sowie die Zusatzinformationen an ein von dem prozessorgesteuerten System gewähltes Ziel, zum Beispiel über SMS oder Fax, übermittelt. Diese Ziele können zum Beispiel Transportfirmen, Dienste- oder Notrufzentralen, Servicestationen oder die Heimadresse des Benutzers der Freisprecheinrichtung sein. Ein generierter AT-Befehl kann beispielsweise das Aussenden einer SMS (SMS = Short Message Service) bewirken, die die Positionsdaten zum Inhalt hat, und gleichzeitig den Aufbau einer Sprechverbindung herstellen.

Eine vorteilhafte Ausbildung des erfindungsgemäßen Verfahrens sieht vor, daß die Fernsteuerung des Mobilfunkgerätes einen Aufbau einer Sprechverbindung mit einem definierten Ziel bewirkt. So kann beispielsweise ein Notruf eines Taxis ein Senden der aktuellen Positionsdaten des Taxis über SMS an die Taxizentrale bewirken und gleichzeitig eine Sprechverbindung aufbauen, die die Gespräche des Innenraums an die Taxizentrale übermittelt, so daß der Taxizentrale eine Einschätzung der Situation und eine der Situation angepaßte Reaktion (Verständigung eines Einsatzwagens der Polizei oder eines Krankenwagen) ermöglicht wird.

Weitere Merkmale der Erfindung ergeben sich aus der nachfolgenden Beschreibung bevorzugter Ausführungsbeispiele unter Bezugnahme auf die Zeichnungen. Es zeigen:
- Figur 1:: eine erfindungsgemäße Freisprecheinrichtung mit Zusatzfunktionen;
- Figur 2:: ein erfindungsgemäßer Ablauf einer Datenübertragung bei einem Flottenmonitoring mit Paßwortschutz;
- Figur 3:: NMEA-Kommandos zum Umschalten und Zurücksetzen der ATC-Schnittstelle.

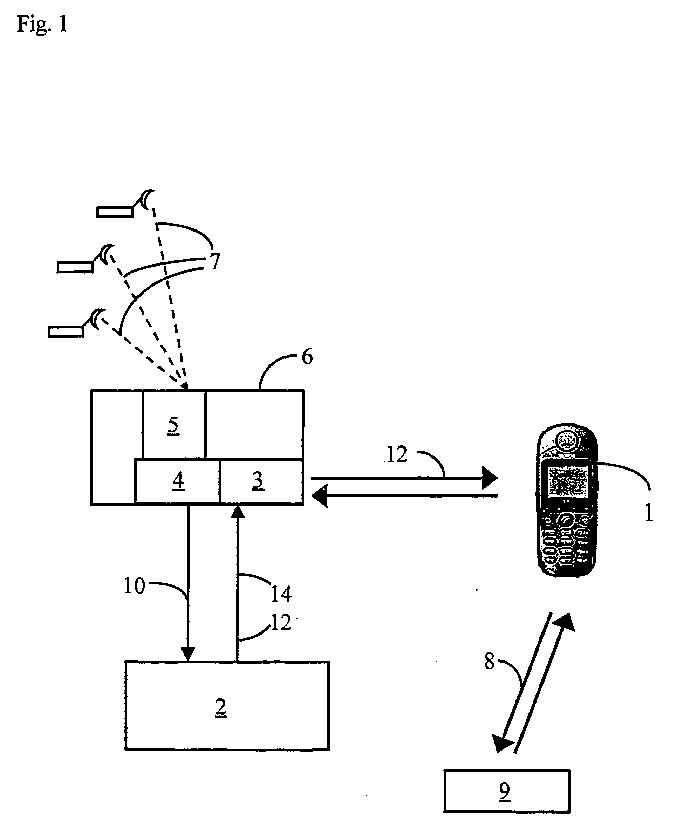

Die Figur 1 zeigt ein bevorzugtes Ausführungsbeispiel der erfindungsgemäßen Freisprecheinrichtung 6. Als Zusatzfunktionen sind ein Positionsbestimmungssystem, hier ein GPS 5, sowie eine NMEA-Schnittstelle 4 und eine ATC-Schnittstelle 3 zur Anbindung eines externen Gerätes, hier eines Computers 2, in die Freisprecheinrichtung 6 implementiert.

Über die ATC-Schnittstelle 3 werden Zugriffe auf ein Mobilfunkgerät 1 ermöglicht, das in eine Handyhalterung eingesteckt ist.

Zur Positionsbestimmung berechnet das GPS-Modul 5 mit Hilfe von Satellitendaten 7 die aktuelle Position. Diese berechneten Positionsdaten werden mit Hilfe eines Programmes oder einer Software in NMEA-Positionsdatensätze 10 umgewandelt, an der NMEA-Schnittstelle 4 der Freisprecheinrichtung 6 ausgegeben und dem Computer 2 beziehungsweise einem externen Gerät, zur Verfügung gestellt.

Der Computer 2, beispielsweise ein Laptop, entnimmt diese NMEA-Positionsdatensätze 10 und kann je nach Anwendung Zusatzinformationen 11 hinzufügen. Dies sind beispielsweise Informationen über Meß- und Zustandsdaten eines Systems, also zum Beispiel die Temperatur von Kühlwagen, den Druck und den Füllstand eines Tanklasters, oder den Dampfdruck einer Ladung, sowie den Strom, mögliches Feuer oder den Türkontakt eines Laderaumes.

Die aufbereiteten Systemdaten, also die NMEA-Positionsdatensätze 10 sowie die Zusatzinformationen 11 werden in Form eines AT-Befehles 12 der ATC-Schnittstelle 3 zugeleitet. Die aufbereiteten Systemdaten werden lediglich dann ausgegeben, wenn sich das Mobilfunkgerät 1 in der Handyhalterung befindet. Zur Aktivierung beziehungsweise Freischaltung der ATC-Schnittstelle 3 wird vor der Übertragung des AT-Befehles 12 ein NMEA-Kommando 14 übertragen.

Der AT-Befehl 12 bewirkt, daß vorzugsweise per SMS 8 die NMEA-Positionsdaten 10 sowie die Zusatzinformationen 11 per Mobiltelefon 1 über das öffentliche Mobilfunknetz übermittelt werden. Hierbei wird das Ziel 9 der Datenübermittlung per SMS 8 von dem Computer 2 definiert.

Während über die NMEA-Schnittstelle 4 lediglich Daten in einem NMEA-Format übertragen werden, überträgt die ATC-Schnittstelle 3 die komplette Kommunikation zwischen dem Computer 2, der Freisprecheinrichtung 6 und dem Mobilfunkgerät 1. Hierbei ist die NMEA-Schnittstelle 4 gemeinsam mit der ATC-Schnittstelle auf einer 6-poligen Westernbuchse mit versetzter Rastnase aufgelegt (ATC/NMEA-Schnittstelle).

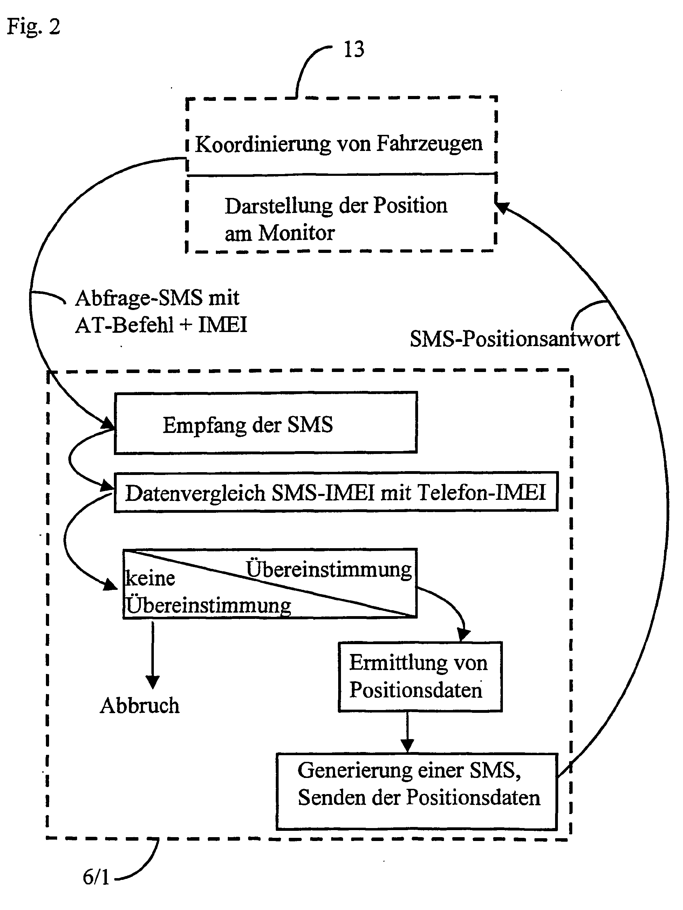

Die Figur 2 zeigt einen Ablauf einer Datenübertragung bei einem Flottenmonitoring mit Paßwortschutz. In die erfindungsgemäße Freisprecheinrichtung ist ein Flottenmanagementprotokoll implementiert, das es ermöglicht, über SMS beziehungsweise über das Internet sowie einem Provider und SMS Positionsanfragen zu empfangen und Flottenmanagementprotokolle zu versenden.

Eine Flottenzentrale 13 mit einem Computer, der eine Flottenmanagementsoftware enthält, und einem Telefon erfragt die Position eines der zu koordinierenden Fahrzeuge. Hierzu generiert die Software ein Abfrage-SMS, schickt dieses über das öffentliche Mobilfunknetz zum Mobilfunkgerät 1 des Fahrzeugs. Das Abfrage-SMS enthält einen AT-Befehl (Positionsanfragebefehl) und darüber hinaus die IMEI, also die Identifizierungsnummer, des Mobilfunkgerätes in dem entsprechenden Fahrzeug. Die erfindungsgemäße Freisprecheinrichtung 6 erkennt, daß es sich um ein Flottenmanagement-SMS handelt und vergleicht die IMEI der Abfrage-SMS mit der IMEI des Mobilfunkgerätes.

Vorteilhaft sind die IMEI der Mobilfunkgeräte der zu koordinierenden Fahrzeuge in der Software der Flottenzentrale 13 enthalten. Die IMEI kann also als Schutz vor unautorisierter Abfrage von Fahrzeugdaten dienen, so daß bei fehlender oder falscher IMEI keine Auskunft gegeben wird.

Stimmen diese beiden IMEI-Nummern überein, werden die aktuellen Positionsdaten ermittelt und diese automatisch über einen AT-Befehl als SMS mit Hilfe des Mobilfunkgerätes 1 an die anfragende Flottenzentrale 13 zurückgeschickt (SMS-Positionsantwort). Die SMS enthält also die gewünschten Daten, in diesem Falle die aktuellen Positionsdaten, die in der Flottenzentrale 13 eine Darstellung der Fahrzeugposition am Computermonitor erlauben. Stimmen die IMEI-Nummern nicht überein findet keine Übermittlung der Positionsdaten statt.

Darüber hinaus können die ermittelten Positionsdaten in NMEA-Datensätze umgewandelt werden und an ein extern an die Freisprecheinrichtung angeschlossenes Gerät, vorzugsweise an einen Computer, übermittelt werden. Je nach Software, die der Computer beinhaltet, werden Zusatzinformationen ermittelt und an die anfragende Stelle, als SMS gesendet.

Somit kann die erfindungsgemäße Freisprecheinrichtung für die unterschiedlichsten Anwendungsgebiete verwendet werden. Neben einer Ladungszustandsüberwachung und einer Laderaumüberwachung sind jegliche Art von ortsabhängiger Meß- und Zustandsdatenübertragung möglich. Dies sind zum Beispiel eine Fernsteuerung von Aggregaten (ist beispielsweise ein Aggregat heißgelaufen, kann ein Befehl für eine automatische Kühlung oder ein Not-Aus gegeben werden, sowie eine Nachricht über den Zustand des Systems an eine Zentrale übermittelt werden), eine Selbstdiagnose und Fernwartung von Fahrzeugen, ein Taxi-Notruf, eine Fahrtenbuchdatenübertragung, sowie Navigationsanwendungen, Floating Car Data (Telematikzentrale sammelt Verkehrsinformationen), Diebstahlüberwachung (Meldung bei Aufbruch einer Tür), automatische Straßenbenutzungsgebührenabbuchung oder mobile Büros und Forschungsstationen.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Insgesamt wird durch die Erfindung eine Freisprecheinrichtung mit integriertem Positionsbestimmungssystem und NMEA-Schnittstelle vorgestellt, die eine Fernsteuerbarkeit eines Mobiltelefons erlaubt. Weiterhin wird ein Verfahren zum Betrieb der Freisprecheinrichtung vorgestellt.

Die Erfindung stellt also ein Positions- und Fernsteuerungstool zur Verfügung, das eine Realisierung vieler GPS-Anwendungen und Entwicklungen ermöglicht und somit ein Problem vieler Systementwickler, -hersteller und Systemhäuser löst, für die eine Neuentwicklung eines Positionsbestimmungssystems zu teuer oder aus technischen Gründen nicht umsetzbar ist.

## Patentansprüche

1. Freisprecheinrichtung (6) mit Zusatzfunktion für ein Mobilfunkgerät (1), das sich in einer Telefonhalterung befindet, wobei die Zusatzfunktion zumindest ein zur Ermittlung von Positionsdaten eingerichtetes Positionsbestimmungssystem (5), vorzugsweise ein GPS, und eine NMEA-Schnittstelle (4) aufweist und wobei mindestens eine Antenne zum Senden/Empfangen von Satelliten- und/oder Funksignalen vorhanden ist,
**dadurch gekennzeichnet,**
**dass** die Freisprecheinrichtung eine zur Fernsteuerung des Mobilfunkgerätes (1) eingerichtete ATC-Schnittstelle (3) umfaßt, wobei die ATC-Schnittstelle (3) weiterhin zur Anbindung eines externen prozessorgesteuerten Systems (2) ausgebildet ist.

2. Freisprecheinrichtung (6) gemäß dem voranstehenden Anspruch 1,
**dadurch gekennzeichnet,**
**daß** eine NMEA-Schnittstelle zur Anbindung des externen prozessorgesteuerten Systems (2) vorhanden ist.

3. Freisprecheinrichtung (6) gemäß einem der voranstehenden Ansprüche 1 bis 2, **dadurch gekennzeichnet, daß** zumindest ein Umschalter vorgesehen ist, der die ATC-Schnittstelle (3) steuert.

4. Freisprecheinrichtung (6) gemäß einem der voranstehenden Ansprüche 1 bis 3, **dadurch gekennzeichnet, daß** eine Dualbandkombiantenne, für den Empfang von Positionsdaten und zum Senden/Empfangen von Mobilfunkdaten, vorhanden ist.

5. Freisprecheinrichtung (6) gemäß einem der voranstehenden Ansprüche 1 bis 4, **dadurch gekennzeichnet, daß** die Freisprecheinrichtung (6) ein Mikrofon und/oder einen Lautsprecher und/oder einen Zusatzhörer und/oder einen Datenkabelsatz aufweist.

6. Freisprecheinrichtung (6) gemäß einem der voranstehenden Ansprüche 1 bis 5, **dadurch gekennzeichnet, daß** ein Flottenmanagementprotokoll vorhanden ist.

7. Verfahren zum Betrieb einer Freisprecheinrichtung (6) mit Zusatzfunktion für ein Mobilfunkgerät (1), das sich in einer Telefonhalterung befindet, wobei zumindest Positionsdaten über eine Antenne empfangen und zur Verfügung gestellt werden und die Positionsdaten über eine ATC-Schnittstelle (3) der Freisprecheinrichtung (6) automatisch über das Mobilfunkgerät (1), vorzugsweise als SMS, an ein definiertes Ziel gesendet werden, wobei die ATC-Schnittstelle (3) mit Hilfe eines Kommandos, vorzugsweise eines NMEA-Kommandos (14), angesteuert wird und die ATC-Schnittstelle (3) weiterhin zur Anbindung eines externen prozessorgesteuerten Systems (2) ausgebildet ist.

8. Verfahren gemäß dem voranstehenden Anspruch 7, **dadurch gekennzeichnet, daß** die Positionsdaten in NMEA-Positionsdatensätze (10) umgeformt und über einer NMEA-Schnittstelle (4) zur verfügung gestellt werden.

9. Verfahren gemäß dem voranstehenden Anspruch 8, **dadurch gekennzeichnet, daß** die NMEA-Positionsdatensätze (10) von dem prozessorgesteuerten System (2) entnommen und bearbeitet werden und aufbereitete Systemdaten der ATC-Schnittstelle (3) der Freisprecheinrichtung (6) zugeleitet und über das Mobilfunkgerät (1) zu einem definierten Ziel (9) übermittelt werden, wobei die aufbereiteten Systemdaten zumindest AT-Befehle (12) zur Fernsteuerung des Mobilfunkgerätes (1) und die bearbeiteten NMEA-Positionsdatensätze (10) enthalten.

10. Verfahren gemäß einem der voranstehenden Ansprüche 5 bis 7, **dadurch gekennzeichnet, daß** die Fernsteuerung des Mobilfunkgerätes (1) eine Sprechverbindung mit einem definierten Ziel (9) aufbaut.

## Claims

1. Handsfree talking device (6) having an additional function for a mobile radio device (1) located in a telephone holder, with said additional function having at least one position determining system (5), preferably a GPS, for determining position data, and an NMEA interface (4) and with at least one antenna for sending/receiving satellite and/or radio signals being provided,
**characterised in that**
the handsfree talking device includes an ATC interface (3) set up for remotely controlling the mobile radio device (1), with said ATC interface (3) furthermore being embodied for linking in an external processor-controlled system (2)

2. Handsfree talking device (6) according to the preceding claim 1,
**characterised in that**
an NMEA interface is present for linking in an external processor-controlled system (2).

3. Handsfree talking device (6) according to one of the preceding claims 1 to 2,
**characterised in that**
at least one changeover switch is provided that controls the ATC interface (3).

4. Handsfree talking device (6) according to one of the preceding claims 1 to 3,
**characterised in that**
a dual-band combination antenna, for receiving position data and for sending/receiving mobile radio data, is provided.

5. Handsfree talking device (6) according to one of the preceding claims 1 to 4,
**characterised in that**
the handsfree talking device (6) has a microphone and/or a loudspeaker and/or an additional handset and/or a data cable set.

6. Handsfree talking device (6) according to one of the preceding claims 1 to 5,
**characterised in that**
a fleet management protocol is present.

7. Method for operating a handsfree talking device (6) having an additional function for a mobile radio device (1) located in a telephone holder, with at least position data being received and made available via an antenna and with said position data being sent automatically via an ATC interface (3) of the handsfree talking device (6) over the mobile radio device (1), preferably in SMS form, to a defined destination, with said ATC interface (3) being activated with the aid of a command, preferably an NMEA command (14) and with said ATC interface 13) furthermore being embodied for linking in an external processor-controlled system (2).

8. Method according to the preceding claim 7,
**characterised in that**
the position data is converted into NMEA position datasets (10) and made available via an NMEA interface (4).

9. Method according to the preceding claim 8,
**characterised in that**
the NMEA position datasets (10) are taken from the processor-controlled system (2) and processed and edited system data of the ATC interface (3) routed to the handsfree talking device (6) and conveyed over the mobile radio device (1) to a defined destination (9), with said edited system data containing at least AT instructions (12) for remotely controlling the mobile radio device (1) and the processed NMEA position datasets (10).

10. Method according to one of the preceding claims 5 to 7,
**characterised in that**
the remote control of the mobile radio device (1) sets up a voice connection to a defined destination (9).

## Revendications

1. Dispositif mains libres (6) avec fonction supplémentaire pour un émetteur-récepteur mobile (1) se trouvant sur un support de téléphone, la fonction supplémentaire présentant au moins un système de positionnement (5) équipé pour déterminer des données de position, de préférence un GPS, et une interface NMEA (4) et au moins une antenne permettant l'émission/la réception de signaux satellite et/ou de signaux radio étant présente,
**caractérisé en ce que**
le dispositif mains libres comprend une interface ATC (3) équipée pour la commande à distance de l'émetteur-récepteur mobile (1), l'interface ATC (3) étant en outre conçue pour le raccordement d'un système externe (2) commandé par processeur.

2. Dispositif mains libres (6) selon la revendication précédente 1
**caractérisé en ce qu'**
il existe une interface NMEA destinée au raccordement du système externe (2) commandé par processeur.

3. Dispositif mains libres (6) selon l'une des revendications précédentes 1 à 2, **caractérisé en ce qu**'il est prévu au moins un commutateur qui commande l'interface ATC (3).

4. Dispositif mains libres (6) selon l'une des revendications précédentes 1 à 3, **caractérisé en ce qu**' il existe une antenne émettrice-réceptrice à double bande pour la réception de données de position et pour l'émission/la réception de données de radiocommunication mobile.

5. Dispositif mains libres (6) selon l'une des revendications précédentes 1 à 4, **caractérisé en ce que**
le dispositif mains libres (6) présente un microphone et/ou un haut-parleur et/ou un écouteur supplémentaire et/ou un jeu de câbles de données.

6. Dispositif mains libres (6) selon l'une des revendications précédentes 1 à 5, **caractérisé en ce qu'**il existe un protocole de gestion de parc de véhicules.

7. Procédé permettant de faire fonctionner un dispositif mains libres (6) avec fonction supplémentaire pour un émetteur-récepteur mobile (1) se trouvant dans un support de téléphone, au moins des données de position étant reçues par l'intermédiaire d'une antenne et mises à disposition et lesdites données de position étant transmises automatiquement à une destination définie au moyen de l'émetteur-récepteur mobile (1) par l'intermédiaire d'une interface ATC (3) du dispositif mains libres (6), et ce de préférence sous forme de SMS, l'interface ATC (3) étant activée à l'aide d'une instruction (14), de préférence d'une instruction NMEA et l'interface ATC (3) étant conçue pour le raccordement d'un système externe (2) commandé par processeur.

8. Procédé selon la revendication précédente 7, **caractérisé en ce que** les données de position sont transformées en ensembles de données de position NMEA (10) et mises à disposition par l'intermédiaire d'une interface NMEA (4).

9. Procédé selon la revendication précédente 8, **caractérisé en ce que** les ensembles de données de position NMEA (10) sont prélevés et traités par le système (2) commandé par processeur et **en ce que** des données de système traitées sont envoyées à l'interface ATC (3) du dispositif mains libres (6) et sont transmises par l'intermédiaire de l'émetteur-récepteur mobile (1) à une destination définie (9), les données de système traitées contenant au moins des instructions AT (12) permettant la commande à distance de l'émetteur-récepteur mobile (1) et les ensembles de données de position NMEA (10) traités.

10. Procédé selon l'une des revendications précédentes 5 à 7, **caractérisé en ce que** la commande à distance de l'émetteur-récepteur mobile (1) établit une communication vocale avec une destination définie (9).
